Europäisches Patentamt

European Patent Office

Office européen des brevets

(19)

(11) Publication number: **0 100 179**
**B1**

# EUROPEAN PATENT SPECIFICATION

(45) Date of publication of patent specification: **19.03.86**

(51) Int. Cl.⁴: **B 62 L 3/02**

(21) Application number: **83304029.8**

(22) Date of filing: **12.07.83**

(54) Handlebar mounted master cylinder.

(30) Priority: **24.07.82 GB 8221459**
**31.03.83 GB 8309083**

(43) Date of publication of application:
**08.02.84 Bulletin 84/06**

(45) Publication of the grant of the patent:
**19.03.86 Bulletin 86/12**

(84) Designated Contracting States:
**DE FR GB IT**

(56) References cited:
**DE-A-2 802 261**
**DE-B-2 922 399**
**FR-A-2 317 157**
**GB-A-1 317 246**
**GB-A-1 536 353**
**GB-A-1 548 364**
**GB-A-1 591 012**
**GB-A-2 026 774**
**US-A-3 802 200**

(73) Proprietor: **AUTOMOTIVE PRODUCTS PUBLIC
LIMITED COMPANY**
**Tachbrook Road**
**Leamington Spa Warwickshire CV31 3ER (GB)**

(72) Inventor: **Dawkes, Andrew Peter**
**5 New Street Cubbington**
**Leamington Spa Warwickshire CV32 7LA (GB)**

(74) Representative: **Farrow, Robert Michael**
**Patent Department Automotive Products plc**
**Tachbrook Road**
**Leamington Spa Warwickshire CV31 3ER (GB)**

## Description

This invention relates to handlebar mounted master cylinders particularly through not exclusively for motor scooters.

Unlike motor cycles, the handlebars of motor scooters are usually housed in a cowl. The cowl is generally aerodynamically shaped and houses the headlamp, speedometer and operating cables for the front brake, clutch, gearchange and accelerator. The cowl protects the cables especially from accident damage and provides a neat uncluttered appearance to the scooter. Upper and lower cowl parts, usually die cast in an aluminium alloy are fixed about the handlebar by setscrews.

It has been proposed to provide a hydraulically operable front disc brake for a motor scooter and one problem has been to locate the master cylinder on the handlebar whilst retaining the traditional neat and uncluttered appearance of the scooter.

It is already known from GB—A—1548364 to provide a handlebar cowl assembly for a motor cycle according to the preamble of claim 1 comprising a cowl member, a hand lever pivoted to the cowl member, a master cylinder housed in a bore of the cowl member, and fluid supply in communication with said master cylinder. The hand lever acts on the piston through a system of levers.

In a master cylinder of this kind it is convenient to use a tubular master cylinder as known from GB—A—1536353 and it then becomes necessary to provide a convenient means for locating the master cylinder axially in its bore.

According to the present invention there is provided a handlebar cowl assembly for a motor cycle, comprising a cowl member, a hand lever pivoted to the cowl member, a master cylinder housed in a bore of the cowl member, the hand lever being arranged to thrust on a piston of the master cylinder, and a fluid supply in fluid communication with said master cylinder, characterised by the provision of a strap surrounding the master cylinder to hold a reservoir connection against a passage leading to the interior of the master cylinder, the bore in the cowl member being stepped to receive the strap such that the strap locates the master cylinder.axially within the bore against withdrawal against the direction of thrust on the piston.

Preferably the reservoir connection is spigotted into the master cylinder to provide positive location, axially of the master cylinder between the master cylinder and the strap.

To enable the master cylinder to be assembled within the cowl, the cowl may be formed in two parts, split substantially along a transverse plane of the master cylinder bore.

The invention will now be described by way of example only and with reference to the accompanying drawings in which:—

Figure 1 is a transverse view through a handlebar assembly incorporating the invention;

Figure 2 is a section on line VI—VI of figure 1, showing the master cylinder itself in full;

Figure 3 is a side elevation of the master cylinder, showing its reservoir connection in section; and

Figure 4 is a plan view of the master cylinder of figure 3.

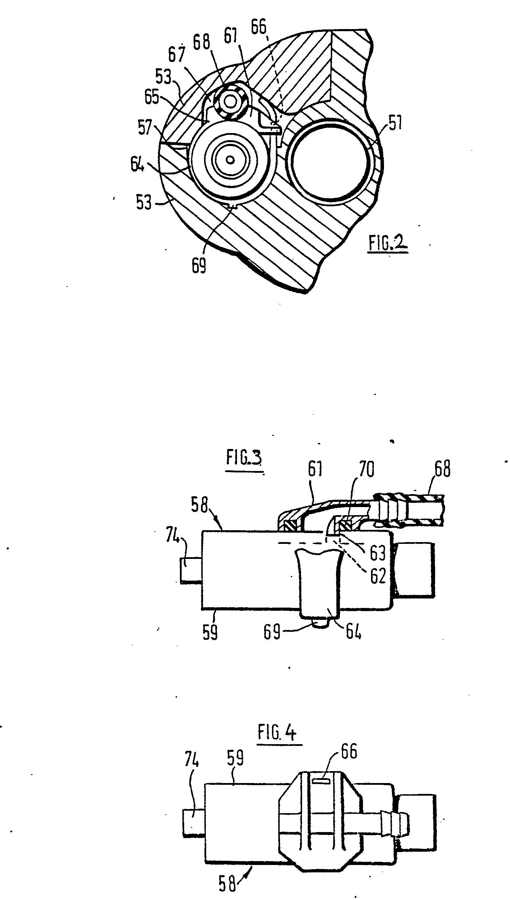

The drawings show one end of a motor cycle handlebar 51 having the usual rubber hand grip 52. A cowl 53 for the handlebar extends from the hand grip 52 over the central portion of the handlebar to the other hand grip (not shown). On the rear side of the cowl 53 is a switch panel 54 secured by a screw 55 and having thumb switches 56 for operation of the electrical equipment provided on the motor cycle. The front side of the cowl 53 has a bore 57 opening into the cowl interior and housing a master cylinder 58. A piston 74 is urged outwardly in the master cylinder bore by a coil spring 24 and has the usual pressure seal 25 and atmospheric seal 26. The cowl is formed in two parts divided as shown in figure 2 to allow radial access into the bore 57 as best seen in figure 2.

The master cylinder has a tubular steel body 59 best seen in figures 3 and 4. A reservoir connection 61 communicates with a passage 62 in the wall of the master cylinder, leading to the interior of the master cylinder to supply fluid thereto. Connection 61 is spigotted at 63 to the master cylinder and is held securely against the face of the master cylinder by a strap 64 which at one side 65 is integral with the connection 61 and after passing round the master cylinder is connected to the connection 61 by passing through an aperture 66 with which it locks positively due for example to serrations on the outer face of the strap and a co-operating formation in the aperture 66.

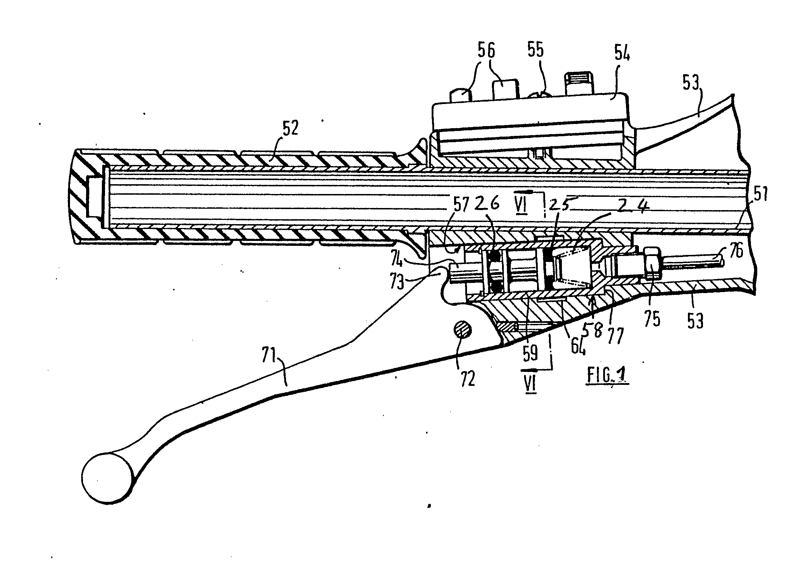

As best seen in figure 1, strap 64 engages in an enlarged part of the bore 57 in such a way that the strap is constrained against movement axially of the master cylinder in either direction. Because of the spigotted connection 63 and the tightness of the strap 64, the master cylinder is similarly constrained.

As best seen in figure 2, bore 57 opens on its upper side into an enlarged chamber 67 which houses the connection 61 and through which a connection hose 68 leads to a reservoir or supply tank. The enlarged chamber 67 also houses the free end of the strap 64 which has passed through the aperture 66. It is in order to deflect the strap against the wall of chamber 67 as shown. Strap 64 also incorporates a location pip 69 which engages in a corresponding recess in the bore 57 in order to hold the strap and thus the master cylinder against rotation.

A hydraulic seal 70 is arranged around the spigot 63 in order to provide a fluid tight seal between the connection 61 and the master cylinder.

A hand-operable brake lever 71 is pivoted at 72 to the cowl and has a projection 73 arranged to engage directly against a piston 74 of the master cylinder 58.

The master cylinder also has a brake connection 75 leading through brake tube 76 to a brake to be actuated.

To operate the brake, an operative grips the handlebar grip 52 and brake lever 71 to bring the lever 71 towards the hand grip 52, thereby pivotting the handle 71 and causing projection 73 to bear against piston 74. This causes the piston to be displaced within the master cylinder and thus supplies hydraulic fluid pressure through tube 76 towards a brake. This thrust on the piston tends to urge the master cylinder further into its bore away from the hand lever and as the force involved may be substantial, the master cylinder has a shoulder 77 which engages against a corresponding shoulder within the bore. The installation of strap 64 and its associated constraints are sufficiently flexible to ensure that the axial load applied to the master cylinder during brake actuation is reacted against the rigid supporting shoulder 77.

The strap 64 and its associated enlarged part of the bore 57 constrains the master cylinder against accidental rotation and also against falling out of its bore in a direction towards the handle or at least retreating towards the lever 71 in such a way as to require excessive hand lever movement to actuate the brake.

In this way, the provision of strap 64 obviates the requirement for additional mechanical constraint by means of which the master cylinder might retreat accidentally along the bore.

The kind of motor cycle to which the cowl and master cylinder assembly is most appropriate is a motor scooter which is normally provided with a cowl of this nature and which may require a hydraulic master cylinder with the cowl. The master cylinder is intended primarily for actuation of a front disc brake but could be connected to a rear brake or used for clutch actuation.

## Claims

1. A handlebar cowl assembly for a motor cycle, comprising a cowl member (53), a hand lever (71) pivoted to the cowl member, a master cylinder (59) housed in a bore (57) of the cowl member, the hand lever being arranged to thrust on a piston (74) of the master cylinder, and a fluid supply (68) in fluid communication with said master cylinder, characterised by the provision of a strap (64) surrounding the master cylinder (59) to hold a reservoir connection (61) against a passage (62) leading to the interior of the master cylinder (59), the bore (57) in the cowl member being stepped to receive the strap (64) such that the strap (64) locates the master cylinder (59) axially within the bore (57) against withdrawal against the direction of thrust on the piston (74).

2. An assembly according to claim 1 characterised in that the reservoir connection (61) is spigotted (at 63) into the master cylinder (59) to provide positive location, axially of the master cylinder (59) between the master cylinder (59) and the strap (64).

3. An assembly according to claim 1 or claim 2, characterised in that to enable the master cylinder (59) to be assembled within the cowl (53), the cowl is formed in two parts (53, 53) split substantially along a transverse plane of the master cylinder bore.

## Revendications

1. Ensemble guidon-carénage pour une motocyclette, comprenant un élément de carénage (53), un levier à main (71) articulé sur le carénage, un maître cylindre (59) logé dans un alésage (57) du carénage, le levier à main étant agencé pour exercer une poussée sur un piston (74) du maître cylindre, et une alimentation en fluide (68) qui est en communication pour le passage du fluide avec ledit maître cylindre, caractérisé par la présence d'un collier (64) qui entoure le maître cylindre (59) pour maintenir un raccord de réservoir (61) appliqué contre un passage (62) conduisant à l'intérieur du maître cylindre (59), le perçage (57) ménagé dans l'élément de carénage comportant une partie élargie pour recevoir le collier (64) de telle manière que le collier (64) positionne le maître cylindre (59) dans la direction axiale, à l'intérieur du perçage (57) en le bloquant contre l'extraction dans le sens inverse du sens de la poussée exercée sur le piston (74).

2. Ensemble selon la revendication 1, caractérisé en ce que le raccord du réservoir (61) est engagé dans le maître cylindre (59) en (63) pour assurer le positionnement effectif, dans la direction axiale du maître cylindre (59), entre le maître cylindre (59) et le collier (64).

3. Ensemble selon la revendication 1 ou la revendication 2, caractérisé en ce que, pour permettre d'assembler le maître cylindre (59) à l'intérieur du carénage (53), le carénage est formé de deux parties qui sont séparées à peu près suivant un plan transversal du perçage du maître cylindre.

## Patentansprüche

1. Lenkerverkleidungsanordnung für ein Motorrad, mit einem Verkleidungsteil (53), einem Handhebel (71), der an dem Verkleidungsteil schwenkbar gelagert ist, einem Steuerzylinder (59), der in einer Bohrung (57) des Verkleidungsteils untergebracht ist, wobei der Handhebel dafür ausgebildet ist, auf einen Kolben (74) des Steuerzylinders zu drücken, und einer in Fluidverbindung mit dem Steuerzylinder stehenden Fluidzufuhreinrichtung (68), gekennziechnet durch ein Band (64), das den Steuerzylinder (59) umgibt, um ein Vorratsbehälteranschlußstück (61) gegen einen Kanal (62) zu halten, der in den Steuerzylinder (59) führt, wobei die Bohrung (57) in dem Verkleidungsteil abgestuft ist, um das Band (64) derart aufzunehmen, daß das Band (64) den Steuerzylinder (59) axial innerhalb der Bohrung (57) gegen ein Zurückziehen gegen die Richtung der Druckkraft auf den Kolben (74) festähit.

2. Anordnung nach Anspruch 1, dadurch gekennzeichnet, daß das Vorratsbehälteranschlußstück (61) in den Steuerzylinder (59) (bei 63) eingesteckt ist, um in Axialrichtung des Steuerzylinders (59) einen festen Halt zwischen dem Steuerzylinder (59) und dem Band (64) zu schaffen.

3. Anordnung nach Anspruch 1 oder Anspruch 2, dadurch gekennzeichnet, daß die Verkleidung aus zwei Teilen (53, 53) gebildet ist, die im wesentlichen längs einer querverlaufenden Ebene der Steuerzylinderbohrung geteilt sind, um den Steuerzylinder (59) in die Verkleidung (53) einbauen zu können.

FIG.1

FIG.2

FIG.3

FIG.4